# EUROPEAN PATENT SPECIFICATION

(11) **EP 3 929 811 B1**
(45) Date of publication and mention of the grant of the patent: **14.08.2024**
(21) Application number: 21305860.5
(22) Date of filing: 23.06.2021
(51) Int. Cl.: G06V 20/59, G06V 40/10

(54) **DRIVING CONTROL SYSTEM FOR AN AUTONOMOUS VEHICLE**
FAHRSTEUERUNGSSYSTEM FÜR EIN AUTONOMES FAHRZEUG
SYSTÈME DE COMMANDE DE CONDUITE POUR UN VÉHICULE AUTONOME

(30) Priority: 23.06.2020 IT 202000015094
(43) Date of publication of application: 29.12.2021
(73) Proprietor: IVECO FRANCE S.A.S., 69200 Vénissieux (FR)
(72) Inventor: CODRON, Stephane, 69008 LYON (FR)
(74) Representative: Studio Torta S.p.A.

(56) References cited:
- FR-A3- 3 079 778
- US-A1- 2018 345 748
- US-A1- 2020 094 645

## Description

### TECHNICAL FIELD

The present invention relates to a driving control system for an autonomous vehicle, in particular a driving control system for an autonomous public passenger transport vehicle.

### STATE OF THE PRIOR ART

Autonomous vehicles use a plurality of sensors to enable automatic control of the driving of the vehicle.

Among these sensors, it is known to use sensors configured to acquire data from in front of the front wall of the vehicle, i.e. related to its direction, to road conditions, or to the presence of obstacle elements along the road to be travelled by the vehicle.

These sensors are normally cameras, radar means, or lidars which are positioned on the lower edge of the front wall of the vehicle. In the case of public passenger transport vehicles, this edge is normally raised above the ground by approximately 300 mm and is therefore quite high when compared to the edge on road vehicles for personal use.

However, in a bus, passengers can move around inside the bus and therefore the distribution of passenger weight on the floor can vary continuously even though the total weight of the passengers remains the same.

Therefore, it is clear that, depending on the weight distribution in the bus and on the way it travels (e.g. braking/acceleration), the vehicle may be subject to inclinations of up to 30° from the vertical to the ground.

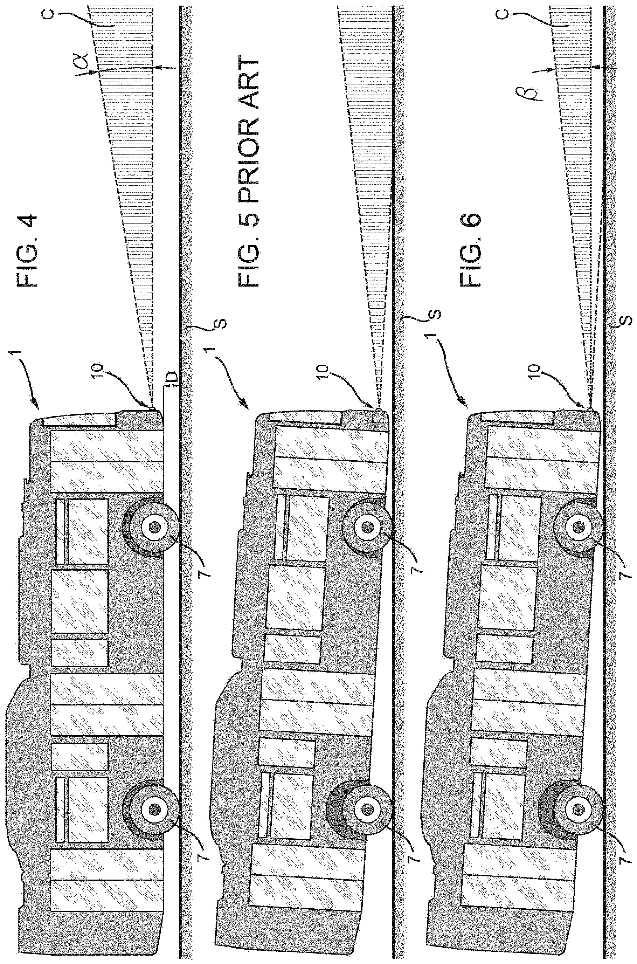

It is therefore clear that under certain loading and braking conditions the vehicle may be in a state as illustrated in Figure 5 where part of the sensing cone of the sensor means intercepts the ground creating detection problems and therefore preventing correct automatic driving of the vehicle, detecting false positives.

An example of solution is given in US2018/345748 A1 that discloses a system and a method for varying the vehicle inclination due to a weight distribution thereon by varying the suspension characteristics. Such variation allows to have sensors means always in a predetermine range of direction.

It is therefore necessary to improve the control systems of autonomous vehicles, especially those intended for public transport of passengers, in order to increase their safety.

This invention aims to resolve the above-mentioned drawbacks in an economical and optimised way.

### SUMMARY OF THE INVENTION

The above-mentioned objects are achieved by a vehicle comprising a control system and a control method according to the attached claims.

Preferred embodiments of the invention are made according to the dependent claims or related to the independent claims mentioned above.

### BRIEF DESCRIPTION OF THE DRAWINGS

Other characteristics and benefits of the invention will become apparent from the following non-limiting description, provided for illustrative purposes, with reference to the attached drawings wherein:
- Figure 1 is a partially sectioned lateral view of a vehicle illustrating components of a driving control system according to the invention;
- Figure 2 is a plan view of the vehicle of Figure 1;

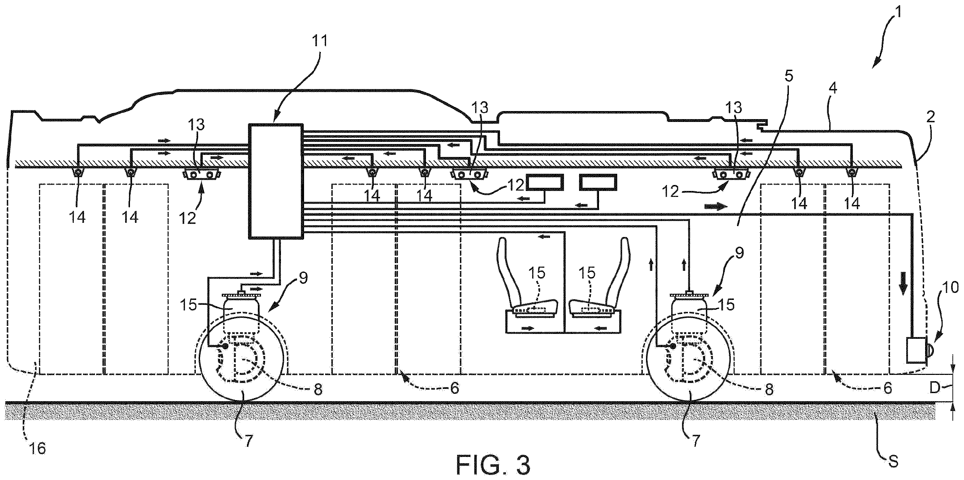

- Figure 3 is a partially sectioned lateral view of a vehicle illustrating further components of a driving control system according to the invention;
- Figure 4 is a schematic lateral view of a vehicle comprising a driving control system according to the invention in a first operating condition;
- Figure 5 is a schematic lateral view of a vehicle comprising a driving control system according to the prior art; and
- Figure 6 is a schematic lateral view of a vehicle comprising a driving control system according to the invention in a second operating condition.

### DETAILED DESCRIPTION OF THE INVENTION

The following description refers to a bus, for the sake of clarity and in a non-limiting manner, given that the following description is suitable to be applied to other types of road vehicles having a longitudinal extension such as to generate a considerable oscillation in its front part.

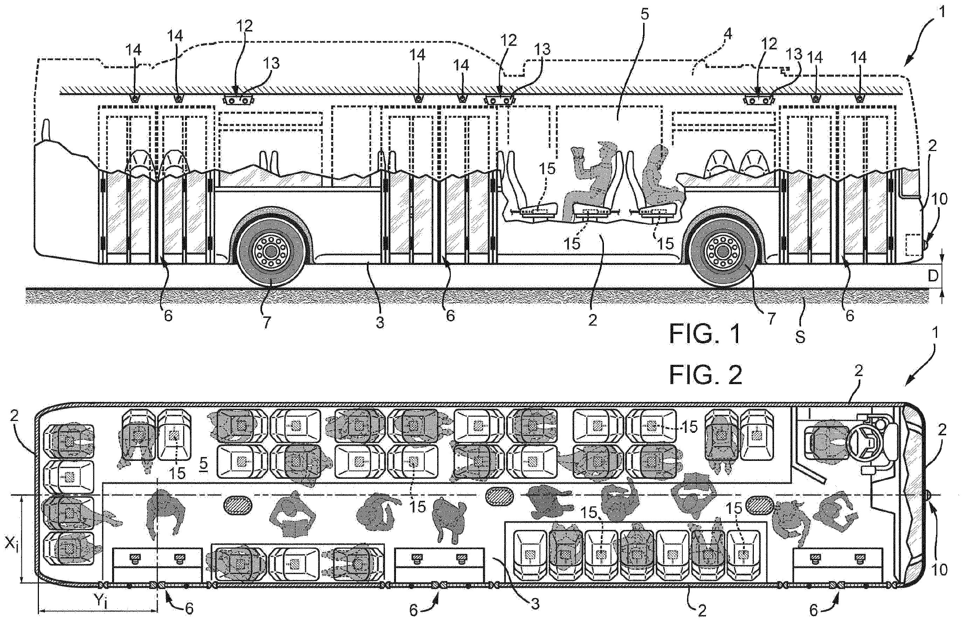

Figure 1 illustrates a bus 1 of known type comprising a plurality of walls 2, a floor 3, and a roof 4 configured to delimit an interior space 5 of the bus 1 suitable for transporting passengers and accessible through doors 6 located on at least one of the walls 2. As known, the floor 3 is raised by a distance D, for example 300 mm, from the ground S.

The bus 1 also comprises a plurality of front and rear wheels 7, carried by a respective axle 8 which is connected to the vehicle chassis by a suspension system. Each wheel 7 is also provided with a braking system 9, which is assumed to be known.

The vehicle 1 is of the autonomous type and therefore comprises sensor means 10 and an electronic control unit 11. The latter is configured to allow autonomous driving of the vehicle 1 on the basis of data acquired by the sensor means 10 thanks to actuating means configured to control the various functional elements of the vehicle, for example the braking system, the engine etc.

The sensor means 10 are also configured to detect the presence of an obstacle element along the travel path of the bus 1. In particular, these sensor means 10 comprise sensor means such as cameras, lidars and/or radar means, and are configured to acquire data relating to the presence or absence in their field of view C of an obstacle, and the size of the obstacle.

Preferably, the sensor means 10 are carried by the front wall 2 in a position at approximately the same height as the floor 3, i.e. at a distance D from the ground S, and are oriented substantially parallel to the ground S.

Normally, the field of detection tends to expand from the point of installation of the sensor means 10 like a cone, one edge of which is parallel to the ground, as illustrated in Figures 4 and 5, and the other edge is inclined by an angle α indicating the "aperture" of the field of vision C as a function of the distance from the bus 1.

The bus 1 also comprises a plurality of image acquisition means 12 configured to view an area of the interior 5 of the bus 1 and configured to detect the silhouette of passengers and their position Xᵢ, Yᵢ on the floor 3. Beneficially, the image acquisition means are cameras 13, preferably thermal cameras.

Preferably, the cameras 13 are at least two in number, that is to say one camera configured to detect an anterior portion of the interior space 5 and one camera configured to detect a posterior portion of the internal space. In the case of a long bus 1, as illustrated, the bus could comprise a third or fourth camera placed in intermediate positions with respect to the front and rear cameras 13.

The bus 1 may further comprise cameras 14 positioned in front of each door 6 of the bus configured to acquire an image of each door 6.

The bus 1 may further comprise means for detecting its inclination (not shown), for example an inclinometer, configured to detect the current inclination of the bus 1.

The bus 1 may also comprise weight sensing means 15 configured to detect the weight acting on a vehicle support member such as a seat and be integrated therein.

The electronic control unit 11 is electronically connected to the sensor means 10, the image acquisition means 12, the cameras 14, the inclination detection means, the weight detection means and the other functional systems of the vehicle 1, such as the braking system 9, for example by means of a wired connection or wireless transmission means. Preferably, the electronic control unit 11 is the ECU of the bus 1.

The electronic control unit 11 comprises processing means configured to store data relating to the vehicle, for example its dimensions, and to its operation, for example an acceleration or braking request.

The processing means of the electronic control unit 11 allow it to acquire the following data:
- the silhouettes of the passengers:
- The position Xᵢ, Yᵢ of the passenger silhouettes in relation to the floor 3;
- The number of passengers inside the bus 1, taking into account those getting on and off the vehicle 1;
- The current inclination of the vehicle 1; and
- The weight of the passengers sitting/standing.

According to the invention, the processing means are configured to determine the weight of the passengers and their distribution on the floor 3 and to detect a request for acceleration or braking in order to estimate a slope of the vehicle 1, that is to say the inclination of the front wall 2 of the vehicle 1 with respect to the vertical on the ground S, and thus to vary the field of view C of the sensor means 10 accordingly. In particular, the modification of the field of view C allows it not to intersect the ground S, when the vehicle is braking, or to continue detecting the road, when the vehicle is accelerating.

This modification of the field of view C can be achieved by computer processing thanks to the processing means themselves by ignoring part of the field of view C as illustrated in Figure 6 which is reduced, by an angle proportional to the estimated inclination, to an angle β.

Alternatively or in combination, the bus may comprise actuator means configured to vary the inclination of the sensor means 10 as a function of the estimated inclination of the vehicle 1 so that the field of view C cannot intersect the ground S.

The determination of the weight of the passengers and their distribution can be done in several ways by knowing their location and number.

Each passenger silhouette acquired by the image acquisition means 12 is used to calculate the passenger's weight, for example according to the passenger's height and width, which are compared with tabulated average weight values which can be stored in the electronic control unit. Alternatively, a mathematical formula based on at least the height and width of the passenger's silhouette could provide an estimate of each passenger's weight.

The position of the silhouette is referenced to a point on the plane defined by floor 3. This point can be defined as the intersection of the sagittal and frontal planes of a passenger's silhouette with the plane of the floor 3. This point Xᵢ, Yᵢ is a certain distance from a fixed position on the floor 3, for example the front end of the floor 3.

The images acquired by the cameras 14 can be processed by the electronic control unit 11 in order to calculate the number of passengers who exit and/or enter the bus 1. The number is updated at each bus stop and stored so that the actual number of passengers present in the vehicle 1 is known, in order to verify detection of the correct number of silhouettes by the cameras 13.

The weight of passengers seated or resting on support elements can further be accurately detected by weight sensors 15, for example air bags.

The operation of a vehicle 1 comprising the driving control system according to the invention is as follows.

The cameras 13 continuously monitor the interior 5 of the vehicle 1 by detecting the silhouette of the passengers and their position on the floor 3.

The data relating to the silhouette of the passengers and their position Xᵢ, Yᵢ and optionally their weight is received in real time by the electronic control unit 11 which determines the weight distribution of the passengers on the floor 3 of the bus 1.

The electronic control unit 11 continuously receives data relating to the operation of the vehicle, in particular an acceleration or braking instruction.

When this instruction is received, it works out the future slope of the vehicle 1, i.e. the inclination of the front wall 2 with respect to the vertical, i.e. at the end of the braking/acceleration instruction, on the basis of the passenger weight distribution, the current inclination of the bus and the dimensions of the vehicle 1.

It thus varies the field of view C, i.e. it modifies it informatically and/or moves the sensor means 10 in such a way that there is no interference with the ground S.

The estimation of the inclination of the front wall 2 can be calculated by means of moment/inertia equations for the bus 1 with respect to the axles 8 or by means of other types of dynamic equilibrium equations.

In view of the above, the present invention also relates to a method of controlling the driving of an autonomous vehicle as described above and comprising the following steps:
- detection of the distribution of the weight of the passengers on the floor 3 of the vehicle 1;
- reception of a braking/acceleration instruction for the vehicle 1;
- estimation of the future slope of the vehicle 1 as a function of the distribution of the passenger weights calculated in the previous step, of the current slope of the vehicle, of the braking/acceleration instruction and of the dimensions of the vehicle 1;
- modification of the visual field C acquired by the sensor means 10 as a function of the value of this estimated slope.

In particular, detection of the distribution of the weight of the passengers may comprise the steps of:
- detection of an image of the interior 5 of the vehicle 1;
- recognition of the silhouette and the position Xi, Yi of each passenger in the interior 5 of said vehicle 1; and
- estimation of the weight Fi of each of the passengers acting on the floor 3 of the vehicle 1 as a function of the shape of the silhouette.

Alternatively, or in combination, the weight of seated passengers can also be detected by the weight sensing means 15.

In particular, the modification of the visual field may comprise the step of:
- Ignoring or adding a portion of the visual field C of the sensor means 10.

Alternatively, or in combination with, the visual field modification may comprise the step of:
- modifying the inclination of the sensor means 4 relative to the front wall 2.

The method may further comprise the subsequent step of counting the number of passengers present on the bus 1 and of storing this number in the electronic control unit in order to verify detection of the correct number of silhouettes.

From the foregoing, the benefits of a vehicle 1 comprising a control system according to the present invention are apparent.

With the vehicle 1 described above, the vehicle can be driven automatically and safely even if large oscillations occur. Indeed, it is possible to maintain a constant monitoring of the road, avoiding false positives.

The use of thermal cameras and an inclinometer make possible a dynamic calculation according to the real conditions of the bus 1.

Furthermore, the system described can be effectively implemented on any type of vehicle.

The optional use of cameras 14 or weight sensors 15 make it possible to refine the estimation of the future slope of the wall 2.

Finally, it is apparent that the vehicle comprising a control system according to the present invention may be subject to modifications and variations without thereby departing from the protective scope of the claims.

The sensor means 10 may be lidars, radars or cameras, as mentioned above. The image acquisition means 12 could also comprise "standard" cameras rather than thermal cameras 13.

The cameras 14 at the vehicle doors can be optional as can the weight sensors 15

The interpolation of the data acquired by the electronic control unit can also be of any mathematical type or related to any dynamic law of known type.

## Claims

1. An autonomously driven road vehicle (1), said vehicle comprising a plurality of walls (2), a floor (3) and a roof (4) defining an interior space (5) accessible to passengers,
said vehicle (1) comprising sensor means (10) carried by one of the walls (2) of said vehicle (1) and configured to acquire data in a visual field (C) extending from said wall (2) and an electronic control unit (11) comprising processing means configured to receive said data to allow automatic driving of said vehicle (1),
said vehicle comprising image acquisition means (12) configured to acquire images of the interior (5) of said vehicle (1),
said electronic control unit (11) being configured to store data relating to the dimensions of said vehicle (1) and being electrically connected to the functional elements of the latter,
said vehicle comprising means for detecting a current slope of said vehicle,
**characterized in that** said electronic control unit (11) being configured to detect the silhouette of the passengers using the images acquired by said image acquisition means (12) and to determine the distribution of the weights of each of the passengers and their position (Xi, Yi) on said floor (3),
said electronic control unit (11) being configured to continuously receive a braking/acceleration instruction for said vehicle (1) and in response to receive said instruction estimating a future slope of said vehicle based on the passenger weights calculated in the previous step, the current slope of said vehicle, and the dimensions of said vehicle (1),
said electronic control unit varying the visual field (C) of said sensor means (10) based on the estimated future slope so that said visual field (C) does not intersect the ground (S), when the vehicle is braking, or continue detecting the road, when the vehicle is accelerating.

2. The vehicle according to claim 1, wherein said sensor means comprise at least one of a camera, radar means, or lidars.

3. The vehicle according to claims 1 or 2, wherein said image acquisition means (12) comprise at least one thermal camera.

4. The vehicle according to one of the preceding claims, comprising weight sensor means (15) integrated in support elements of said vehicle (1), said electronic control unit (11) being electrically connected to these weight sensor means (15) and also using the data acquired by the latter to estimate said future slope of said vehicle (1).

5. The vehicle according to one of the preceding claims, comprising at least one camera (14) carried near the doors (6) of said vehicle, said electronic control unit (11) being electrically connected to this camera (14) and using the data acquired by the latter to determine the number of passengers in the interior (5) of said vehicle (1), this number of passengers also being used to estimate said slope of said vehicle (1).

6. The vehicle according to one of the preceding claims, wherein the modification of said visual field (C) is an informatic modification of said visual field (C) as a function of said estimated future slope.

7. The vehicle according to one of the preceding claims, wherein said vehicle (1) comprises actuator means configured to vary the inclination of said sensor means (10), the modification of said visual field (C) being a modification of the inclination of said sensor means (10) as a function of said estimated future slope.

8. A method for controlling the driving of an autonomous vehicle according to claim 1,
the method comprising the steps of:
detecting the silhouette of the passengers within said vehicle from the acquired images and determining the distribution of weights of each of the passengers and
their positions (Xi, Yi) on the floor using the electronic control unit;
continuously receiving a braking/acceleration instruction for said vehicle and, in response, estimating a future slope of said vehicle based on the calculated passenger weights, the current slope of said vehicle, and the dimensions of said vehicle using the electronic control unit;
varying the visual field (C) of the sensor means based on the estimated future slope using the electronic control unit so that the visual field (C) does not intersect the ground (S) when the vehicle is braking, or continues detecting the road when the vehicle is accelerating.

9. The method according to claim 8, wherein the detection of the distribution of the weight of the passengers may comprise the steps of:
- estimation of the weight of each of the passengers acting on the floor (3) of said vehicle (1) as a function of the shape of the silhouette.

10. The method according to claim 9, wherein the weight of seated passengers can also be detected by the weight sensing means (15).

11. The method according to one of claims 8 to 10, wherein the modification of the visual field may comprise the steps of:
- ignoring or adding a portion of the visual field (C) of the sensor means (10).

12. The method according to one of claims 8 to 11, wherein the modification of the visual field may include the steps of:
- modifying the inclination of the sensor means (10) relative to the wall (2) by which they are carried.

13. The method according to one of claims 8 to 12, further comprising the subsequent step of counting the number of passengers present on said vehicle (1) and of storing this number in the electronic control unit (11) in order to verify detection of the correct number of silhouettes.

## Patentansprüche

1. Autonom angetriebenes Straßenfahrzeug (1), welches Fahrzeug eine Mehrzahl von Wänden (2), einen Boden (3) und ein Dach (4) umfasst, welche einen Innenraum (5) begrenzen, der Fahrgästen zugänglich ist,
welches Fahrzeug (1) Sensormittel (10) umfasst, die von einer der Wände (2) des Fahrzeugs getragen werden und dazu ausgebildet sind, Daten in einem Sichtfeld (C) zu erfassen, das sich von der Wand (2) her erstreckt, und eine elektronische Steuereinheit (11), umfassend Verarbeitungsmittel, ausgebildet zum Empfang der Daten zur Ermöglichung eines autonomen Fahrens des Fahrzeugs (1),
welches Fahrzeug Bilderfassungsmittel (12) umfasst, ausgebildet zur Erfassung von Bildern des Inneren (5) des Fahrzeugs (1),
wobei die elektronische Steuereinheit (11) dazu ausgebildet ist, Daten bezüglich der Abmessungen des Fahrzeugs (1) zu speichern und welche elektrisch mit den Funktionselementen des letzteren verbunden ist,
wobei das Fahrzeug Mittel zur Detektion einer aktuellen Neigung des Fahrzeugs umfasst,
**dadurch gekennzeichnet, dass** die elektronische Steuereinheit (11) dazu ausgebildet ist, die Umrisse der Fahrgäste unter Verwendung der Bilder, die durch die Bilderfassungsmittel (12) erfasst werden, zu ermitteln und die Verteilung der Gewichte von jedem der Fahrgäste und ihre Positionen (Xi, Yi) auf dem Boden (3) zu bestimmen,
wobei die elektronische Steuereinheit (11) dazu ausgebildet ist, kontinuierlich einen Brems-/Beschleunigungsbefehl für das Fahrzeug (1) zu empfangen und auf den Empfang eines solchen Befehls eine zukünftige Neigung des Fahrzeugs auf Grundlage der Fahrgastgewichte, die im vorhergehenden Schritt berechnet wurden, der aktuellen Neigung des Fahrzeugs und der Abmessungen des Fahrzeugs abzuschätzen, wobei die elektronische Steuereinheit das Sichtfeld (C) der Sensormittel (10) auf Grundlage der geschätzten zukünftigen Neigung variiert, derart, dass das Sichtfeld (C) nicht den Untergrund (S) schneidet, wenn das Fahrzeug bremst, oder fortwährend die Straße erfasst, wenn das Fahrzeug beschleunigt.

2. Fahrzeug gemäß Anspruch 1, bei welchem die Sensormittel zumindest eines aus den folgenden umfasst: eine Kamera, Radarmittel oder LIDAR.

3. Fahrzeug gemäß Anspruch 1 oder 2, bei welchem die Bilderfassungsmittel (12) zumindest eine Wärmekamera umfassen.

4. Fahrzeug gemäß einem der vorhergehenden Ansprüche, umfassend Gewichtssensormittel (15), die in die Tragelemente des Fahrzeugs (1) integriert sind, wobei die elektronische Steuereinheit (11) elektrisch mit diesen Gewichtssensormitteln (15) verbunden ist und zusätzlich die Daten verwendet, die von den letzteren erfasst werden, um die zukünftige Neigung des Fahrzeugs (1) abzuschätzen.

5. Fahrzeug gemäß einem der vorhergehenden Ansprüche, umfassend zumindest eine Kamera (14), die in der Nähe der Türen (6) des Fahrzeugs angebracht ist, wobei die elektronische Steuereinheit (11) elektrisch mit dieser Kamera (14) verbunden ist und die Daten verwendet, die von der letzteren erfasst werden, um die Anzahl von Fahrgästen im Innenraum (5) des Fahrzeugs zu bestimmen, wobei diese Anzahl von Fahrgästen ebenfalls dazu verwendet wird, die Neigung des Fahrzeugs (1) abzuschätzen.

6. Fahrzeug gemäß einem der vorhergehenden Ansprüche, bei welchem die Veränderung des Sichtfelds (C) eine Informatik-Veränderung des Sichtfelds (C) als eine Funktion der geschätzten zukünftigen Neigung ist.

7. Fahrzeug gemäß einem der vorhergehenden Ansprüche, bei welchem das Fahrzeug (1) Betätigungsmittel umfasst, ausgebildet zur Veränderung der Neigung der Sensormittel (10), wobei die Veränderung des Sichtfelds (C) eine Veränderung der Neigung der Sensormittel (10) als eine Funktion der geschätzten zukünftigen Neigung ist.

8. Verfahren zur Steuerung des Antriebs eines autonomen Fahrzeugs gemäß Anspruch 1, welches Verfahren die folgenden Schritte umfasst:
Ermittlung der Umrisse der Fahrgäste innerhalb des Fahrzeugs aus den aufgenommenen Bildern und Bestimmung der Verteilung der Gewichte von jedem der Fahrgäste und ihrer Positionen (Xi, Yi) auf dem Boden unter Verwendung der elektronischen Steuereinheit,
Kontinuierliches Empfangen eines Brems-/Beschleunigungsbefehls für das Fahrzeug und daraufhin Schätzung einer zukünftigen Neigung des Fahrzeugs auf Grundlage der berechneten Fahrgastgewichte, der aktuellen Neigung des Fahrzeugs und der Abmessungen des Fahrzeugs unter Verwendung der elektronischen Steuereinheit,
Veränderung des Sichtfelds (C) der Sensormittel auf Grundlage der geschätzten zukünftigen Neigung unter Verwendung der elektronischen Steuereinheit, derart, dass das Sichtfeld (C) nicht den Untergrund (S) schneidet, wenn das Fahrzeug bremst, oder fortwährend die Straße erfasst, wenn das Fahrzeug beschleunigt.

9. Verfahren gemäß Anspruch 8, bei welchem die Ermittlung der Verteilung der Gewichte der Fahrgäste die folgenden Schritte umfassen kann:
- Schätzung des Gewichts von jedem der Fahrgäste, das auf den Boden (3) des Fahrzeugs (1) wirkt, als eine Funktion der Form des Umrisses.

10. Verfahren gemäß Anspruch 9, bei welchem das Gewicht der sitzenden Fahrgäste ebenfalls durch Gewichtssensormittel (15) ermittelt werden kann.

11. Verfahren gemäß einem der Ansprüche 8 bis 10, bei welchem die Veränderung des Gesichtsfelds die folgenden Schritte umfassen kann:
- Ignorieren oder Hinzufügen eines Teils des Sichtfelds (C) der Sensormittel (10).

12. Verfahren gemäß einem der Ansprüche 8 bis 11, bei welchem die Veränderung des Sichtfelds die folgenden Schritte umfassen kann:
- Veränderung der Neigung der Sensormittel (10) in Bezug auf die Wand (2), an welcher sie angebracht sind.

13. Verfahren gemäß einem der Ansprüche 8 bis 12, ferner umfassend den nachfolgenden Schritt des Zählens der Anzahl der Fahrgäste, die im Fahrzeug (1) vorhanden sind, und Speichern dieser Anzahl in der elektronischen Steuereinheit (11) zur Verifikation der Bestimmung der korrekten Anzahl von Umrissen.

## Revendications

1. Véhicule (1) routier à conduite autonome, ledit véhicule comprenant une pluralité de parois (2), un plancher (3) et un toit (4) définissant un espace intérieur (5) accessible aux passagers,
ledit véhicule (1) comprenant des moyens capteurs (10) portés par l'une des parois (2) dudit véhicule (1) et configurés pour acquérir des données dans un champ visuel (C) s'étendant à partir de ladite paroi (2), et une unité de commande électronique (11) comprenant des moyens de traitement configurés pour recevoir lesdites données afin de permettre la conduite automatique dudit véhicule (1),
ledit véhicule comprenant des moyens d'acquisition d'images (12) configurés pour acquérir des images de l'intérieur (5) dudit véhicule (1),
ladite unité de commande électronique (11) étant configurée pour stocker des données relatives aux dimensions dudit véhicule (1) et étant connectée électriquement aux éléments fonctionnels de ce dernier,
ledit véhicule comprenant des moyens pour détecter une pente actuelle dudit véhicule,
**caractérisé en ce que** ladite unité de commande électronique (11) est configurée pour détecter la silhouette des passagers à l'aide des images acquises par lesdits moyens d'acquisition d'images (12), et pour déterminer la répartition des poids de chacun des passagers et leur position (Xi, Yi) sur ledit plancher (3),
ladite unité de commande électronique (11) étant configurée pour recevoir en continu une instruction de freinage/accélération pour ledit véhicule (1), et en réponse à la réception de ladite instruction, estimer une future pente dudit véhicule sur la base des poids des passagers calculés à l'étape précédente, de la pente actuelle dudit véhicule, et des dimensions dudit véhicule (1),
ladite unité de commande électronique faisant varier le champ visuel (C) desdits moyens capteurs (10) sur la base de la future pente estimée, de sorte que ledit champ visuel (C) ne coupe pas le sol (S) lorsque le véhicule freine ou continue à détecter la route lorsque le véhicule accélère.

2. Véhicule selon la revendication 1, dans lequel lesdits moyens capteurs comprennent au moins un parmi une caméra, un radar ou des LIDAR.

3. Véhicule selon les revendications 1 ou 2, dans lequel lesdits moyens d'acquisition d'images (12) comprennent au moins une caméra thermique.

4. Véhicule selon l'une des revendications précédentes, comprenant des moyens capteurs de poids (15) intégrés dans des éléments de support dudit véhicule (1), ladite unité de commande électronique (11) étant connectée électriquement à ces moyens capteurs de poids (15) et utilisant également les données acquises par ce dernier pour estimer ladite future pente dudit véhicule (1).

5. Véhicule selon l'une des revendications précédentes, comprenant au moins une caméra (14) portée à proximité des portes (6) dudit véhicule, ladite unité de commande électronique (11) étant connectée électriquement à cette caméra (14) et utilisant les données acquises par cette dernière pour déterminer le nombre de passagers à l'intérieur (5) dudit véhicule (1), ce nombre de passagers étant également utilisé pour estimer ladite pente dudit véhicule (1).

6. Véhicule selon l'une des revendications précédentes, dans lequel la modification dudit champ visuel (C) est une modification informatique dudit champ visuel (C) en fonction de ladite future pente estimée.

7. Véhicule selon l'une des revendications précédentes, dans lequel ledit véhicule (1) comprend des moyens actionneurs configurés pour faire varier l'inclinaison desdits moyens capteurs (10), la modification dudit champ visuel (C) étant une modification de l'inclinaison desdits moyens capteurs (10) en fonction de ladite future pente estimée.

8. Procédé pour commander la conduite d'un véhicule autonome selon la revendication 1,
le procédé comprenant les étapes suivantes :
détecter la silhouette des passagers au sein dudit véhicule à partir des images acquises, et déterminer la répartition des poids de chacun des passagers et leur positions (Xi, Yi) sur le plancher à l'aide de l'unité de commande électronique ;
recevoir en continu une instruction de freinage/accélération pour ledit véhicule et,
en réponse, estimer une future pente dudit véhicule sur la base des poids des passagers calculés, de la pente actuelle dudit véhicule, et des dimensions dudit véhicule à l'aide de l'unité de commande électronique ;
faire varier le champ visuel (C) des moyens capteurs sur la base de la future pente estimée à l'aide de l'unité de commande électronique, de sorte que le champ visuel (C) ne coupe pas le sol (S) lorsque le véhicule freine ou continue à détecter la route lorsque le véhicule accélère.

9. Procédé selon la revendication 8, dans lequel la détection de la répartition du poids des passagers peut comprendre l'étape suivante :
- estimer le poids de chacun des passagers agissant sur le plancher (3) dudit véhicule (1) en fonction de la forme de la silhouette.

10. Procédé selon la revendication 9, dans lequel le poids des passagers assis peut également être détecté par les moyens de détection de poids (15).

11. Procédé selon l'une des revendications 8 à 10, dans lequel la modification du champ visuel peut comprendre l'étape suivante :
- ignorer ou ajouter une partie du champ visuel (C) des moyens capteurs (10).

12. Procédé selon l'une des revendications 8 à 11, dans lequel la modification du champ visuel peut comporter l'étape suivante :
- modifier l'inclinaison des moyens capteurs (10) par rapport à la paroi (2) qui les porte.

13. Procédé selon l'une des revendications 8 à 12, comprenant en outre l'étape ultérieure de compter le nombre de passagers présents dans ledit véhicule (1) et de stocker ce nombre dans l'unité de commande électronique (11) afin de vérifier la détection du nombre correct de silhouettes.
